# EUROPÄISCHE PATENTSCHRIFT

(11) **EP 0 752 901 B1**
(45) Veröffentlichungstag und Bekanntmachung des Hinweises auf die Patenterteilung: **28.10.1998**
(21) Anmeldenummer: 95913865.2
(22) Anmeldetag: 23.03.1995
(51) Int. Cl.: A62D 5/00

(54) **VERFAHREN ZUR HERSTELLUNG VON FLEXIBLEM FLÄCHENFILTERMATERIAL GEGEN SCHADSTOFFE UND VERWENDUNG DERARTIGEN FLÄCHENFILTERMATERIALS**
METHOD OF MANUFACTURING FLEXIBLE SHEET FILTER MATERIAL DESIGNED TO KEEP OUT TOXIC SUBSTANCES, AND USE OF THE MATERIAL
PROCEDE DE PRODUCTION DE FEUILLE FILTRANTE SOUPLE PROTEGEANT CONTRE LES AGENTS CHIMIQUES NOCIFS ET UTILISATION D'UN TEL MATERIAU FILTRANT

(30) Priorität: 29.03.1994 DE 4410920
(43) Veröffentlichungstag der Anmeldung: 15.01.1997
(73) Patentinhaber: Smolik, Klaus, 95482 Gefrees (DE)
(72) Erfinder: Smolik, Klaus, 95482 Gefrees (DE)
(74) Vertreter: Hübner, Gerd, Dipl.-Phys.
(86) Internationale Anmeldenummer: DE9500415
(87) Internationale Veröffentlichungsnummer: WO9526219

(56) Entgegenhaltungen:
- EP-A- 0 090 073
- EP-A- 0 260 841
- FR-A- 2 678 172
- US-A- 4 045 609
- US-A- 4 869 947
- US-A- 4 943 475

## Beschreibung

Die Erfindung befasst sich mit einem Verfahren zur Herstellung von flexiblem Flächenfiltermaterial gegen schädliche Gase oder Flüssigkeiten (Schadstoffe), welches wenigstens eine erste, textile Trägerschicht und eine zweite, auf die Schadstoffe einwirkende, aktive Partikel enthaltende, komprimierte Schaumstoffschicht aufweist, die mit der Trägerschicht im wesentlichen ganzflächig verbunden ist, wobei die Schaumstoffschicht mit einer die aktiven Partikel in einem Bindemittel enthaltenden Paste vor der Aufbringung der Trägerschicht imprägniert und dann komprimiert sowie klebend mit der Trägerschicht verbunden wird.
Weiterhin ist Gegenstand der Erfindung die Herstellung derart hergestellter Flächenmaterialien.

Bei Flächenfiltermaterialien sind häufig mehrere Anforderungen gleichzeitig zu erfüllen. Zum einen soll das Material hinreichende Stabilität aufweisen. Diese ist, wenn als Matrix für das Filtermaterial Schaumstoff verwendet wird, normalerweise nur zu erreichen, wenn die Schaumstoff-Matrix, die die üblicherweise adsorbierenden Partikel trägt, mit einer formstabilen Lage im wesentlichen ganzflächig verbunden wird. Weiterhin gibt es eine Vielzahl von Anwendungsgebieten, insbesondere für Schutzbekleidung, wo eine möglichst geringe Dicke des Flächenfiltermaterials wünschenswert ist, vor allem deswegen, weil ein solches Material im Vergleich zu dickerem Material besser luftdurchlässig und vor allem flexibler ist. Bei Verwendung zu dünnen Schaumstoffes besteht nun jedoch die Gefahr, dass die Adsorptionsleistung stark sinkt und das Flächenfiltermaterial die für das vorgesehene Einsatzgebiet erforderliche Schutzwirkung nicht mehr besitzt.

Aus der EP 0 526 264 A1 ist bereits ein Material für ABC-Schutzbekleidung bekannt, welches als Innenschicht ein Laminat aus einem mit einer Aktivkohle-Partikel aufweisenden Paste imprägnierten Schaumstoffschicht und einer textilen Trägerschicht umfasst. Zur Verminderung der Dicke und Verbesserung der Luftdurchlässigkeit wird hier vorgeschlagen, dass die Schaumstoffschicht anschliessend an das Imprägnieren mit der die Aktivkohle-Partikel enthaltenden Paste komprimiert und mit der Trägerschicht ganzflächig verklebt wird. Dabei wird nach dem Stand der Technik so vorgegangen, dass die Kompression der mit der Aktivkohle-Paste imprägnierten Schaumstoffschicht erfolgt, bevor diese mit der Trägerschicht verklebt wird. Diese Vorgehensweise hat etliche Mängel, wobei vor allem die mangelnde mechanische Stabilität relativ dünner Schaumstoffschichten zu berücksichtigen ist. Dies führt dazu, dass sich die Schaumstoffschicht beim Komprimieren im allgemeinen verwirft, so dass sie nur noch mit grössten Schwierigkeiten gleichmässig und ganzflächig mit der entsprechenden Trägerschicht verbunden werden kann. Ein weiteres Problem bei der Verarbeitung dünner Schaumstoffe besteht darin, dass diese sehr rissempfindlich sind. Besonders problematisch macht sich jedoch bei dem bekannten Verfahren bemerkbar, dass der Schaumstoff wegen seiner geringen Stabilität unter Umständen verschieden stark komprimiert wird, was bedeutet, dass das Schutzmaterial an verschiedenen Stellen unterschiedliche Schutzwirkung aufweist.

Aus der US-A 4 787 949 sind Filter mit hoher Wasseraufnahmefähigkeit bekannt. Diese Filter bestehen aus einer Filterpapier-Schicht. Auf diese wird ein stark wasserabsorbierendes Pulver aufgebracht. Die Pulverschicht wird dann mit einem dünnen Vliespapier abgedeckt. Anschliessend wird auf die dünne Vlieslage Wasser aufgesprüht, wodurch das wasserabsorbierende Pulver klebrig wird und eine gewisse Verbindung zwischen dem Filterpapier und der Vliesschicht herstellt. Nach dem Aufsprühen von Wasser wird die gesamte Anordnung dann zur Verminderung der Dicke der Filterpapier-Schicht komprimiert.

Die Herstellung dieser bekannten Filter setzt voraus, dass die Filterpapier-Schicht ohne Probleme komprimierbar ist und nach der Kompression in dem entsprechenden Zustand verbleibt, nicht aber aufgrund ihrer Elastizität die ursprüngliche Dicke wieder annimmt, weil ja die zur Verbindung der Papierschicht mit der Vliesschicht dienende Pulverlage nur oberflächlich auf die Filterpapier-Schicht wirkt. Würde man das bekannte Verfahren auf ein Flächenfilter-Material übertragen, das als zu komprimierende Schicht eine Schaumstoffschicht aufweist, liesse sich keine zuverlässige Kompression des Schaumstoffes erreichen, weil der Schaumstoff infolge seiner Elastizität immer wieder in die Ausgangslage zurückkehren würde. Ausserdem würden die vorstehend erläuterten Probleme bezüglich der mangelnden mechanischen Stabilität der Schaumstoffschicht sowie der unterschiedlichen Kompression der Schaumstoffschicht nicht beseitigt.

Der Erfindung liegt deswegen die Aufgabe zugrunde, ein Verfahren zur Herstellung von flexiblem Flächenfiltermaterial vorzuschlagen, bei dem durch Komprimieren der Schaumstoffschicht die Gesamtstärke erheblich reduziert ist, trotzdem aber die geschilderten Mängel des Standes der Technik nicht auftreten, d.h. insbesondere nicht die Gefahr besteht, dass das Flächenfiltermaterial über seine Breite unterschiedliche Schutzeigenschaften aufweist oder die Verbindung zwischen Schaumstoff und Trägerschicht nicht gleichmässig ist.

Zur Lösung dieser Aufgabe wird bei einem Verfahren der eingangs erwähnten Art nun vorgeschlagen, so vorzugehen, dass die Schaumstoffschicht mit einer Paste imprägniert wird, deren Bindemittel - zuerst nur - trocknet und - erst - bei höherer Temperatur vernetzt, dass zuerst nur die Paste getrocknet wird, und dass dann die Schaumstoffschicht gleichzeitig komprimiert und mit der Trägerschicht verbunden wird, wobei während der Kompression der Schaumstoffschicht eine Aufheizung der Paste wenigstens auf deren Vernetzungstemperatur während einer zur Fixierung der Schaumstoffschicht mittels der Paste ausreichenden Zeit erfolgt.

Durch die erfindungsgemässe Zusammenfassung der beiden Arbeitsgänge, nämlich Komprimierung der Schaumstoffschicht einerseits und Verbindung der Schaumstoffschicht mit der Trägerschicht andererseits, erreicht man in sehr einfacher Weise, dass die geringe Stabilität der Schaumstoffschicht kompensiert wird. Infolge der gleichzeitigen Verbindung mit der Trägerschicht während des Komprimierens wird sichergestellt, dass die Schaumstoffschicht zwar in der gewünschen Weise zusammengedrückt wird, gleichzeitig sich jedoch nicht unkontrolliert an anderen Stellen ausdehnen oder verziehen kann, so dass eine saubere, ganzflächige Verbindung mit der Trägerschicht geschaffen wird und zudem der Grad der Dickenverminderung der Schaumstoffschicht über deren gesamte Fläche gleich ist, was aber bedeutet, dass auch die Wirksamkeit gegen Schadstoffe über die gesamte Fläche des erfindungsgemäss hergestellten Materials im wesentlichen gleich ist, sofern der Schaumstoff vor dem Komprimieren und Verbinden mit der Trägerschicht nur gleichmässig mit der die aktiven Partikel enthaltenden Paste imprägniert wurde.

Die Vorgehensweise gemäss der Erfindung hat vor allem auch den Vorteil, dass durch die Vernetzung der Paste bei der höheren Temperatur gleichzeitig der Schaumstoff im komprimierten Zustand fixiert wird. Da eine Vernetzung erfolgt, ist auch nicht zu befürchten, dass die Kompression des Schaumstoffes, beispielsweise bei späterem Einfluss höherer Temperaturen, wieder aufgehoben würde.

Es hat sich als günstig erwiesen, wenn zum Komprimieren der Schaumstoffschicht und deren Verbindung mit der Trägerschicht ein Bandkalander verwendet wird. Ein solcher Bandkalander hat den Vorteil, dass das Laminat aus Schaumstoff und Trägerschicht eine vergleichsweise lange Zeit im Spalt verbleibt und damit unter entsprechendem Druck gehalten wird, wodurch sicher eine Vernetzung des Bindemittels der Paste gewährleistet ist.

Im allgemeinen wird eine Paste verwendet werden, die bezüglich der Schadstoffe adsorbierend und/oder reaktiv wirkende Partikel enthält, wobei vorzugsweise als adsorbierend wirkende Partikel Aktivkohle-Partikel, zweckmässig als Pulverkohle mit einer Teilchengrösse von weniger als 50 µm, eingesetzt werden.

Geeignete Bindemittel für die Paste sind - ausgehend von der erläuterten Zweckbestimmung und Wirkungsweise - leicht aufzufinden. Gute Ergebnisse lassen sich erzielen, wenn als Bindemittel in der Paste Mischpolymerisate auf der Basis von Acrylsäureestern verwendet werden, die bei Temperaturen von 100 bis 110 °C trocknen und bei Temperaturen von 120 bis 170 °C vollständig vernetzen.

Für gewisse Anwendungsgebiete werden Flächenfiltermaterialien benötigt, bei denen der Schaumstoff beidseits abgedeckt ist. Zur Erzeugung solcher Materialien wird nach der Erfindung zweckmässigerweise derart vorgegangen, dass gleichzeitig mit der ersten textilen Trägerschicht auf die dieser gegenüberliegende Oberfläche der Schaumstoffschicht eine weitere, vorzugsweise textile Abdeckschicht aufgebracht wird. Derart hergestellte Laminate zeichnen sich ebenfalls durch sehr gute Formgenauigkeit, Planheit und Gleichmässigkeit bezüglich der Adsorptionsleistung über die Fläche aus.

Die Verbindung von Trägerschicht und gegebenenfalls Abdeckschicht mit der Schaumstoffschicht erfolgt vorteilhafterweise mittels eines Schmelzklebers in Form einer, gegegebenenfalls teilflächigen Beschichtung auf der Trägerschicht und/oder Abdeckschicht und/oder in Form eines zwischen die Schichten eingebrachten Netzes. Die Verwendung eines Kleber-Netzes hat vor allem den Vorteil, dass kein weiterer Arbeitsgang zur Aufbringung von Kleber auf eine der Schichten des Laminates erforderlich ist.

Es liegt schliesslich im Rahmen der Erfindung, dass zur Verbindung der Schaumstoffschicht mit der Trägerschicht und gegebenenfalls der Abdeckschicht das Bindemittel der Paste, mit der die Schaumstoffschicht imprägniert ist, dient. Ein derartiges Vorgehen ist allerdings nur möglich, wenn ganz spezielle Bindemittel eingesetzt werden, die, obwohl hinreichend klebend, trotzdem die Poren der Partikel in der Paste nicht verschliessen.

Flexible Flächenfiltermaterialien gemäss der Erfindung sind für eine Vielzahl von Anwendungsgebieten denkbar, wo es darum geht, entweder Schadstoffe zu adsorbieren oder durch Reaktion mit den Partikeln in der Paste, mit der der Schaumstoff imprägniert ist, unschädlich zu machen. Besonders günstig kann ein nach dem Verfahren gemäss der Erfindung hergestelltes Material jedoch für Schutzbekleidung eingesetzt werden, und zwar deswegen, weil es vergleichsweise dünn ist und deswegen aus dem Material hergestellte Schutzbekleidung in ihrem Trageverhalten Schutzbekleidung aus den bisher bekannten, verhältnismässig dicken Materialien weit überlegen ist.

Zusammenfassend kann folgendes festgehalten werden : Bei einem Vorgehen gemäss der Erfindung erhält man ein sehr dünnes Flächenfiltermaterial mit besonders niedriger Wärmeisolation, so dass vor allem Schutzbekleidung aus diesem Material einen hohen Tragekomfort aufweist, da es zum einen sehr textil wirkt, wenig aufträgt und damit den Träger in seiner Bewegungsfreiheit nicht behindert, zum anderen die thermische Belastung beim Tragen des Anzuges nur sehr gering ist.

Ein besonderer Vorzug des Verfahrens nach der Erfindung besteht darin, dass durch den Komprimiervorgang des Schaumstoffes eine Überlappung der einzelnen Schaumsegel eintritt, was zu einer Umlenkung der mit Schadstoffen belasteten Gase führt. Dies bewirkt, dass trotz der erheblichen Reduzierung der Materialdicke die erreichte Schutzwirkung nicht vermindert, wenn nicht sogar verbessert wird, weil das das Filtermaterial durchströmende Gas entsprechend umgelenkt wird und infolgedessen einen vergleichsweise langen Weg durch das Material zurückzulegen hat.

Die gleichzeitige Komprimierung der Schaumstoff-Matrix und deren Verbindung mit der Trägerschicht führt, wie bereits erläutert, zu einer hohen Stabilität des Flächenfiltermaterials, wobei insbesondere eine gleichmässige Schichtstärke des komprimierten Schaumstoffes und dessen einwandfreie Verbindung mit der Trägerschicht erreicht wird. Infolge der Vernetzung des Bindemittels der Paste während des Komprimierens erzielt man eine einwandfreie Fixierung der nach der Komprimierung sehr dünnen Schicht.

Abhängig von den verschiedenen Lagen des Laminats lassen sich eine Vielzahl von unterschiedlichen Produkten erzeugen, die an den gewünschten Einsatzzweck besonders angepasst sind. Als Trägerschicht können beispielsweise Gewebe, Gewirke, Non-Wovens oder Folien verwendet werden. Es ist auch denkbar, das Laminat mit einer wasserundurchlässigen, jedoch wasserdampfdurchlässigen Beschichtung zu versehen.

Nachstehend soll das Verfahren gemäss der Erfindung anhand eines Beispiels erläutert werden.

### Beispiel

Ein retikulierter PU-Schaum von ca. 2 mm Dicke wird im Foulard mit einer Aktivkohle-Paste imprägniert. Die Paste kann auch zusätzlich reaktiv mit den Schadstoffen zu deren Beseitigung bzw. Unschädlichmachung zusammenwirkende Partikel oder sogar nur solche Partikel enthalten.

Als Aktivkohle-Paste wird eine Paste verwendet, in der als Bindersystem ein Mischpolymerisat auf der Basis von Acrylsäureestern eingesetzt wird. Die in der Paste verwendete Aktivkohle ist eine Pulverkohle mit einem Teilchendurchmesser von weniger als 50 µm.

Das Bindemittel der Paste wird so ausgewählt und zusammengesetzt, dass es in einem Bereich von 100 bis 110 °C trocknet, jedoch erst in einem Bereich von 120 bis 160 °C vollständig vernetzt.

Nach dem Imprägnieren im Foulard wird der Schaum bei einer Temperatur von 110 °C getrocknet, nicht jedoch vernetzt.

Der nunmehr getrocknete, imprägnierte Schaum wird dann gleichzeitig mit der Trägerschicht, z.B. einem Textilgewebe oder -gewirke oder auch einem Vlies, einem Bandkalander zugeführt, wo das Laminat einer Temperatur von etwa 160 °C ausgesetzt wird. Dies führt zu einer Vernetzung des Bindemittels der Aktivkohle-Paste. Im Bandkalander wird der Schaumstoff mit entprechend hohem Druck, beispielsweise etwa 220 bar, vor der vollständigen Vernetzung des Bindemittels auf eine Stärke von nur etwa 0,65 mm (d.h. auf etwa 1/3 seiner Ausgangsstärke) komprimiert.

Ein nach dem vorstehend erläuterten Verfahren hergestelltes Flächenfiltermaterial zeichnet sich durch einwandfreie Verbindung von Trägerschicht und Schaumstoff aus. Weiterhin ist es wegen seiner geringen Dicke und infolgedessen relativ niedrigen Wärmeisolation gut zur Verarbeitung in Schutzbekleidung geeignet, wobei das Laminat aus textiler Trägerschicht und komprimierter, imprägnierter Schaumstoffschicht beispielsweise nur als Innenlage verwendet werden kann und zusätzlich eine entsprechend mechanisch stabile Aussenlage vorhanden ist.

Zur Erleichterung der Verarbeitung oder für bestimmte Anwendungsgebiete kann jedoch in dem zur Komprimierung des Schaumstoffes und dessen Verbindung mit der Trägerschicht vorgesehene Arbeitsgang, d.h. beim Durchlaufen durch den Bandkalander, gleichzeitig auf der der Trägerschicht gegenüberliegenden Seite eine Abdeckung auf den komprimierten Schaumstoff aufkaschiert werden, wobei zur Festlegung dieser Abdeckschicht zweckmässig ein besonderes Klebemittel, insbesondere ein Heissschmelzkleber, verwendet wird. Dieser Heissschmelzkleber kann beispielsweise vorher in einem geeigneten Verfahren einseitig auf die Abdeckschicht aufgebracht sein. Eine besonders zweckmässige Vorgehensweise besteht jedoch darin, dass zur Festlegung der Abdeckschicht auf dem Trägerschicht/Schaumstoff-Laminat ein Klebernetz dient, welches zwischen Abdeckschicht und Laminat in den Bandkalander einläuft.

## Patentansprüche

1. Verfahren zur Herstellung von flexiblem Flächenfiltermaterial gegen schädliche Gase oder Flüssigkeiten (Schadstoffe), welches wenigstens eine erste, textile Trägerschicht und eine zweite, auf die Schadstoffe einwirkende, aktive Partikel enthaltende, komprimierte Schaumstoffschicht aufweist, die mit der Trägerschicht im wesentlichen ganzflächig verbunden ist, wobei die Schaumstoffschicht mit einer die aktiven Partikel in einem Bindemittel enthaltenden Paste vor der Aufbringung der Trägerschicht imprägniert und dann komprimiert sowie klebend mit der Trägerschicht verbunden wird,
**dadurch gekennzeichnet,**
dass die Schaumstoffschicht mit einer Paste imprägniert wird, deren Bindemittel trocknet und bei höherer Temperatur vernetzt, dass zuerst nur die Paste getrocknet wird, und dass dann die Schaumstoffschicht gleichzeitig komprimiert und mit der Trägerschicht verbunden wird, wobei während der Kompression der Schaumstoffschicht und deren Verbindung mit der textilen Trägerschicht eine Aufheizung der Paste wenigstens auf deren Vernetzungstemperatur während einer zur Fixierung der Schaumstoffschicht mittels der Paste ausreichenden Zeit erfolgt.

2. Verfahren nach Anspruch 1,
**dadurch gekennzeichnet,**
dass zum Komprimieren der Schaumstoffschicht und deren Verbindung mit der Trägerschicht ein Bandkalander verwendet wird.

3. Verfahren nach Anspruch 1 oder 2,
**dadurch gekennzeichnet,**
dass eine Paste verwendet wird, die adsorbierend und/oder reaktiv wirkende Partikel enthält.

4. Verfahren nach Anspruch 3,
**dadurch gekennzeichnet,**
dass als adsorbierend wirkende Partikel AktivkohlePartikel eingesetzt werden.

5. Verfahren nach Anspruch 4,
**dadurch gekennzeichnet,**
dass die Paste als aktive Partikel Pulverkohle mit einer Teilchengrösse von < 50 µm enthält.

6. Verfahren nach einem der vorhergehenden Ansprüche,
**dadurch gekennzeichnet,**
dass als Bindemittel in der Paste Mischpolymerisate auf der Basis von Acrylsäureestern verwendet werden, die bei Temperaturen von 100 bis 110 °C trocknen und bei Temperaturen von 120 bis 170 °C vollständig vernetzen.

7. Verfahren nach einem der vorhergehenden Ansprüche,
**dadurch gekennzeichnet,**
dass gleichzeitig mit der ersten textilen Trägerschicht auf die dieser gegenüberliegende Oberfläche der Schaumstoffschicht eine weitere, vorzugsweise textile Abdeckschicht aufgebracht wird.

8. Verfahren nach einem der vorhergehenden Ansprüche,
**dadurch gekennzeichnet,**
dass zur Verbindung von Trägerschicht und gegebenenfalls Abdeckschicht mit der Schaumstoffschicht ein Schmelzkleber in Form einer, gegebenenfalls teilflächigen, Beschichtung auf der Trägerschicht und/oder Abdeckschicht und/oder in Form eines zwischen die Schichten eingebrachten Netzes dient.

9. Verfahren nach einem der vorhergehenden Ansprüche,
**dadurch gekennzeichnet,**
dass zur Verbindung der Schaumstoffschicht mit der Trägerschicht und gegebenenfalls der Abdeckschicht das Bindemittel der Paste, mit der die Schaumstoffschicht imprägniert ist, dient.

10. Verwendung eines nach einem oder mehreren der Ansprüche 1 bis 9 hergestellten Flächenfiltermaterials als Material für Schutzbekleidung.

## Claims

1. A method of manufacturing flexible sheet filter material intended to keep out noxious gases or liquids (toxic substances), which comprises at least a first textile substrate sheet and a second compressed sheet of cellular material which contains active particles and acts on the toxic substances and is bonded to the substrate sheet substantially over the full surface, the sheet of cellular material, prior to the application of the substrate sheet, being impregnated with a paste containing the active particles in a binder and then being compressed as well as adhesively bonded to the substrate sheet, characterized in that the sheet of cellular material is impregnated with a paste, the binder of which dries and cross-links at an elevated temperature, in that at first only the paste is dried, and in that then the sheet of cellular material is simultaneously compressed and bonded to the substrate sheet, heating up of the paste at least to its cross-linking temperature for a time sufficient for fixing the sheet of cellular material by means of the paste taking place during the compression of the sheet of cellular material and the latter's bonding to the textile substrate sheet.

2. A method according to claim 1,
characterized in that a strip calender is used for compressing the sheet of cellular material and bonding the latter to the substrate sheet.

3. A method according to claim 1 or 2,
characterized in that a paste is used, which contains particles having an adsorptive and/or reactive effect.

4. A method according to claim 3,
characterized in that activated carbon particles are utilized as particles of adsorptive effect.

5. A method according to claim 4,
characterized in that the paste contains pulverized coal of a particle size of < 50 µm as active particles.

6. A method according to one of the preceding claims,
characterized in that acrylic-acid-ester-based copolymers are used as binders in the paste, which dry at temperatures of 100 to 110°C and completely cross-link at temperatures of 120 to 170°C.

7. A method according to one of the preceding claims,
characterized in that simultaneously with the first textile substrate sheet, another, preferably textile covering sheet is applied to the surface, opposite to the textile substrate sheet, of the sheet of cellular material.

8. A method according to one of the preceding claims,
characterized in that a hot-melt adhesive in the form of a coating, possibly over part of the surface, of the substrate sheet and/or in the form of a net inserted between the sheets serves for bonding the substrate sheet and possibly the covering sheet to the sheet of cellular material.

9. A method according to one of the preceding claims,
characterized in that the binder of the paste with which the sheet of cellular material is impregnated serves for bonding the sheet of cellular material to the substrate sheet and possibly the covering sheet.

10. Use of a sheet filter material manufactured according to one or several of claims 1 to 9 as a material for protective clothing.

## Revendications

1. Procédé pour la fabrication de matière plane, flexible de filtration agissant contre des gaz ou liquides nuisibles (substances nocives) et qui comporte au moins une première couche textile de substrat et une deuxième couche comprimée de mousses qui renferme des particules actives et qui agit sur les substances nocives et qui est reliée avec la couche de substrat essentiellement sur toute la surface, la couche de mousses, avant la mise-en-place de la couche de substrat, étant imprégnée d'une pâte qui renferme les particules actives dans un liant et ensuite étant comprimée ainsi que jointe par collage à la couche de substrat,
caractérisé en ce que la couche de mousses est imprégnée d'une pâte dont le liant sèche et réticule à une température élevée, en ce que d'abord seulement la pâte est séchée, et en ce qu'ensuite la couche de mousse est simultanément comprimée et reliée avec la couche de substrat, un échauffement de la pâte au moins à sa température de réticulation pendant une période suffisante pour la fixation de la couche de mousses par le moyen de la pâte se faisant pendant la compression de la couche de mousses et le raccordement de celle-ci avec la couche textile de substrat.

2. Procédé selon la revendication 1,
caractérisé en ce qu'une calandre de bande est utilisée pour comprimer la couche de mousses et pour la relier à la couche de substrat.

3. Procédé selon la revendication 1 ou 2,
caractérisé en ce qu'une pâte est utilisée qui renferme des particules d'un effet adsorbant et/ou réactif.

4. Procédé selon la revendication 3,
caractérisé en ce que des particules de charbon actif sont employées en tant que particules d'effet adsorbant.

5. Procédé selon la revendication 4,
caractérisé en ce que la pâte, en tant que particules actives, renferme du charbon pulvérisé à l'ordre de < 50 µm.

6. Procédé selon l'une quelconque des revendications précédentes,
caractérisé en ce que des copolymères à base d'acrylates sont utilisés comme liants, copolymères qui sèchent à des températures de 100 à 110°C et qui réticulent complètement à des températures de 120 à 170°C.

7. Procédé selon l'une quelconque des revendications précédentes,
caractérisé en ce qu'en même temps avec la première couche textile de substrat, une autre couche de recouvrement préférentiellement textile est mise en place sur la surface, opposée à la couche de substrat, de la couche de mousses.

8. Procédé selon l'une quelconque des revendications précédentes,
caractérisé en ce qu'une colle à fusion en forme d'un revêtement, s'il y a lieu d'une part de la surface, de la couche de substrat et/ou de la couche de recouvrement, et/ou en forme d'un réseau placé entre les couches sert pour le raccordement de la couche de substrat et, s'il y a lieu, de la couche de recouvrement avec la couche de mousses.

9. Procédé selon l'une quelconque des revendications précédentes,
caractérisé en ce que le liant de la pâte dont est imprégnée la couche de mousses sert pour le raccordement de la couche de mousses avec la couche de substrat et, s'il y a lieu, avec la couche de recouvrement.

10. L'usage de la matière plane de filtration fabriquée selon l'une quelconque ou plusieurs des revendications 1 à 9 en tant que matière pour vêtements protecteurs.
